## Europäisches Patentamt
## European Patent Office
## Office européen des brevets

(11) Numéro de publication: **0 165 192**
**B1**

(12) **FASCICULE DE BREVET EUROPÉEN**

(45) Date de publication du fascicule du brevet: **25.11.87**

(51) Int. Cl.⁴: **B 63 B 35/86,** B 63 H 16/20

(21) Numéro de dépôt: **85440033.0**

(22) Date de dépôt: **24.05.85**

(54) Véhicule marin semi-submersible.

(30) Priorité: **29.05.84 FR 8408631**

(43) Date de publication de la demande:
**18.12.85 Bulletin 85/51**

(45) Mention de la délivrance du brevet:
**25.11.87 Bulletin 87/48**

(84) Etats contractants désignés:
**AT BE CH DE GB IT LI LU NL SE**

(56) Documents cité:
**FR-A-1 375 350**
**FR-A-2 463 049**
**GB-A-2 046 673**

(73) Titulaire: **Gass, André, 6, Avenue de la Marseillaise, F-67000 Strasbourg (FR)**

(72) Inventeur: **Gass, André, 6, Avenue de la Marseillaise, F-67000 Strasbourg (FR)**

(74) Mandataire: **Aubertin, François, Cabinet Lepage & Aubertin Innovations et Prestations 4, rue de Haguenau, F-67000 Strasbourg (FR)**

LIBER, STOCKHOLM 1987

EP 0 165 192 B1

## Description

L'invention concerne un véhicule marin semi-submersible à propulsion en surface et en semi-submersion et composé essentiellement de deux flotteurs et de sièges placés entre ces derniers.

Pour agrémenter les loisirs au bord de la mer, on a conçu des véhicules marins du type "Pédalos" permettant aux usagers de se déplacer sur la surface de l'eau. Ces véhicules comportent deux flotteurs placés parallèlement l'un par rapport à l'autre dont la longueur, la section et le matériau assurent une flottabilité sur l'eau. Entre les deux flotteurs sont disposés des sièges permettant aux usagers de prendre une position assise pour actionner à l'aide des pieds un pédalier en lui soumettant une rotation entraînant soit une roue à aubes, soit une hélice située à l'arrière du véhicule marin. Ainsi, la propulsion de ce dernier est assurée par l'énergie musculaire des usagers. En cas de fatigue, les usagers arrêtent de pédaler et le véhicule marin est bercé par les vagues. Cependant, ces véhicules ne sont pas destinés à l'observation de la faune et de la flore sous-marines.

C'est pourquoi, de nombreux vacanciers préconisent la plongée et la chasse sous-marines pour observer l'environnement aquatique et notamment la faune et la flore sous-marines. Toutefois, il est nécessaire, d'une part, de prévoir un équipement approprié et, d'autre part, que l'usager présente les conditions physiques requises par ce sport. Cette plongée sous-marine n'étant pas sans danger, les plongeurs doivent se soumettre à certaines règles de sécurité mais ces dernières constituent fréquemment une certaine contrainte.

Par ailleurs, on connaît également des sous-marins de poche utilisés soit comme bâtiment de guerre, soit comme engin pacifique pour l'exploration et les interventions sous la mer. Cependant, ces engins ne peuvent être utilisés en tant qu'éléments de loisirs et nécessitent de la part des usagers un entrainement très approfondi et des conditions physiques très développées.

La présente invention a pour but de remédier à ces inconvénients. L'invention, telle qu'elle est caractérisée dans les revendications, résout le problème consistant à créer un véhicule marin semi-submersible à propulsion en surface et en semi-submersion composé essentiellement de deux flotteurs et de sièges placés entre ces derniers, et comportant, solidaire des deux flotteurs en forme de tube, un habitacle en forme de bulle, étanche et transparent, dont la hauteur est supérieure à la profondeur de plongée et renfermant des moyens de propulsion en surface, constitués de pédaliers entraînant en rotation, par l'intermédiaire de chaînes et d'une boîte de renvoi, une hélice située à l'extrémité d'un arbre relié à la boîte de renvoi; des moyens de propulsion en semi-submersion constitués d'un moteur et plus particulièrement d'un petit moteur marin sollicité par un élément de commande par le passager et actionnant la boîte de renvoi pourvue de moyens de débrayage permettant d'intervertir à volonté l'utilisation des moyens de propulsion, et des équipements de contrôle constitués par un profondimètre accouplé à un détecteur de niveau, un témoin pour la vérification de la pression de l'air renfermé dans des bonbonnes d'air et un témoin indiquant le niveau du carburant, et des moyens de sécurité constitués d'un temporisateur accouplé aux pédaliers qui, en constatant l'immobilité de ces derniers, déclenchera le largage automatique de lest pour une émersion immédiate.

Les avantages obtenus grâce à cette invention consistent essentiellement en ce que le véhicule marin semi-submersible présente les avantages d'un engin marin pour les loisirs du type "Pédalos", tout en permettant de combiner ces avantages à ceux de la plongée sous-marine, à savoir l'observation de la faune et de la flore sous-marines.

L'invention est exposée ci-après plus en détail à l'aide de dessins représentant seulement un mode d'exécution.

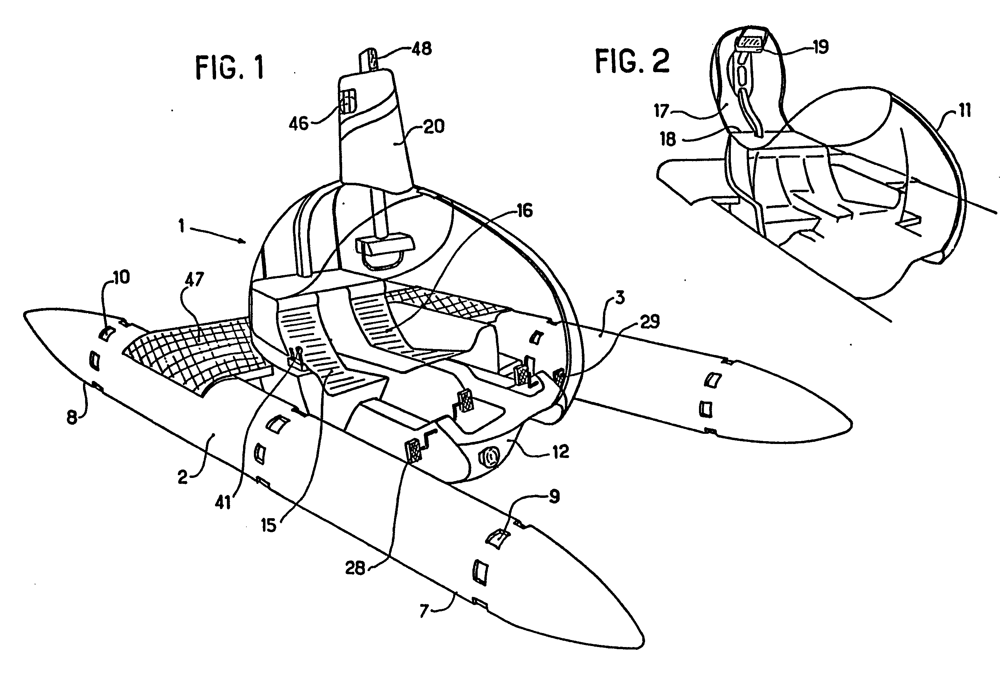

La figure 1 représente en vue en perspective le véhicule marin semi- submersible conforme à l'invention.

La figure 2 représente une vue partielle en perspective de l'habitacle ouvert.

La figure 3 représente en vue en élévation ce véhicule marin semi- mersible, la partie avant des flotteurs étant tronquée.

La figure 4 représente en vue avant le véhicule marin semi-submersible.

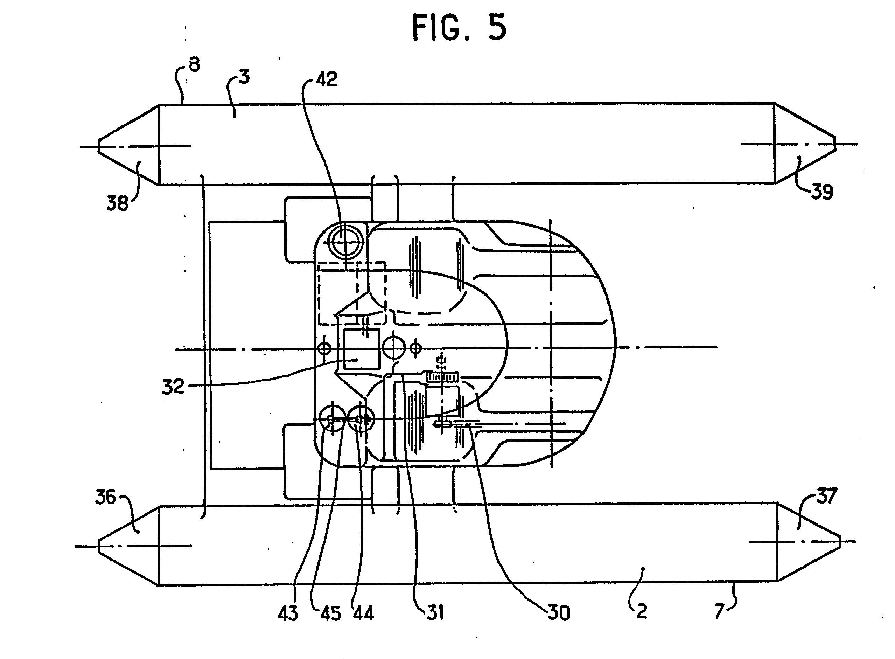

La figure 5 représente en vue en plan le véhicule marin semi-submersible.

On se réfère aux différentes figures.

Le véhicule marin semi-submersible 1 comporte deux tubes 2, 3 disposés parallèlement au plan médian vertical 4 et formant les flotteurs dudit véhicule marin 1. La stabilité de ce dernier est obtenue par deux ballasts 5, 6 réalisés de préférence en caoutchouc gonflable et logés dans lesdits tubes 2, 3. Les tubes 2, 3 présentent à leurs extrémités avant 7 et arrière 8 des ouvertures 9, 10. Pour que le véhicule marin 1 puisse flotter sur l'eau, les ballasts 5, 6 sont remplis d'air comprimé et viennent s'appilquer contre la paroi interne des tubes 2, 3. Par contre, lorsqu'on veut conférer au véhicule marin 1 une position semi-submergée, on chasse l'air comprimé hors des ballasts 5, 6 et l'eau peut pénétrer dans les tubes 2, 3 par lesdites ouvertures 9, 10.

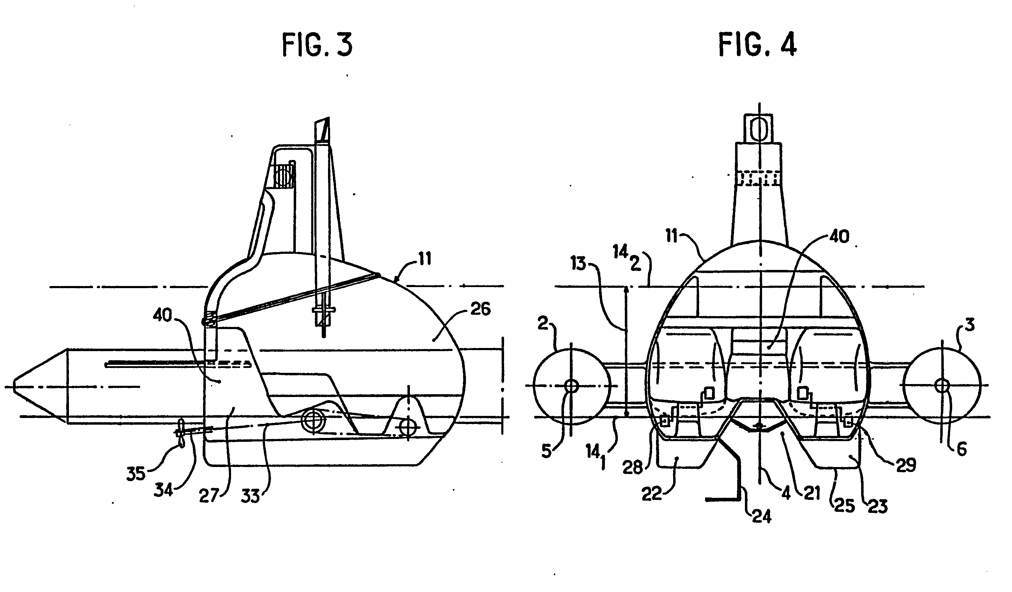

Les tubes 2, 3 sont reliés à un habitacle 11 ayant une forme de bulle. Cet habitacle 11 est réalisé en un matériau transparent permettant aux usagers d'avoir une vue panoramique et d'observer la faune et la flore sous-marines. La hauteur de cet habitacie 11 est supérieure à la profondeur de plongée 13 de sorte que seule la partie inférieure 12 de l'habitacle 11 est immergée. Les repères $14_1$ et $14_2$ de la figure 4 se rapportent à la surface de l'eau lorsque le véhicule marin 1 flotte sur l'eau (repère $14_1$) et lorsque le véhicule marin 1 est en semi-

submersion (repère $14_2$). Cet habitacle 11 peut recevoir deux à trois passagers et renferme des sièges 15, 16. L'habitacle 11 est recouvert d'une coupole 17 rabattable vers l'arrière autour d'un axe d'articulation horizontal 18. Cette coupole 17 peut être actionnée par une poignée de manoeuvre 19 et elle est surmontée d'un reniflard 20, cette poignée de manoeuvre 19 assurant le verrouillage de la coupole 17 et comportant un élément de sécurité annihilant tout déverrouillage intempestif au cours de la plongée.

La partie inférieure 12 de l'habitacle 11 comprend un tunnel 21 permettant de réduire le maître couple du véhicule marin et, par voie de conséquence, de réduire la puissance nécessaire pour faire avancer ledit véhicule marin.

La partie inférieure 12 comporte également du lest pour assurer la semi-submersion du véhicule marin 1. Ce lest est logé dans deux compartiments 22, 23 situés de part et d'autre du tunnel 21 et peut être sous la forme de grenaille de plomb ou de béton. En cas de difficulté, on pourvoit les deux compartiments 22, 23 de trappes 24, 25 permettant le largage immédiat du lest assurant au véhicule marin 1 une émersion pratiquement instantanée.

L'habitacle 11 est divisé en deux compartiments 26, 27, l'un 26 destiné à recevoir les passagers et, l'autre 27 renfermant les différents éléments nécessaires à la propulsion du véhicule marin 1 en semi-submersion. Dans le premier compartiment 26 sont disposés les sièges 15, 16 permettant aux passagers de s'asseoir et d'actionner avec leurs pieds des moyens de propulsion en surface utilisant l'énergie musculaire des passagers. Ces moyens sont des pédaliers 28, 29 reliés par des chaînes 30, 31 à une boîte de renvoi 32 logée dans le second compartiment 27. Cette boîte de renvoi 32 permet la rotation d'un arbre 33 dont l'extrémité arrière 34 fait saillie hors de l'habitacle 11. Cette extrémité arrière 34 comporte une hélice 35 assurant l'avance et/ou le recul du véhicule marin 1. Pour faciliter cette avance respectivement ce recul, les tubes 2, 3 comportent à leurs extrémités avant 7 et arrière 8 des têtes coniques 36, 37, 38, 39.

Le second compartiment 27 renferme également des moyens de propulsion lorsque le véhicule marin 1 est en position de semi-submersion. Ces moyens sont un groupe moteur 40 et plus particulièrement un petit moteur marin. Celui-ci est également branché sur la boîte de renvoi 32. On prévoit sur cette dernière des moyens de débrayage permettant, en cas de défaillance du groupe moteur 40, d'entraîner en rotation l'arbre 33 à l'aide des pédaliers 28, 29 actionnés par les passagers.

Le groupe moteur 40 peut être actionné par un élément de commande 41. En plus de l'arbre 33 portant l'hélice 35, le groupe moteur 40 entraîne un compresseur 42. Ce compresseur 42 assure le débit d'air nécessaire pour le remplissage des ballasts 5, 6. On peut également pourvoir l'habitacle 11 de bonbonnes d'air 43, 44 utilisées en cas de situation de secours. L'utilisation de ces bonbonnes d'air 43, 44 se réalise soit par une commande manuelle, soit par un pressostat actionnant automatiquement un bipasse 45. Par ailleurs, pour augmenter l'autonomie du véhicule marin 1, on peut prévoir un réservoir de carburant.

Pour créer une circulation d'air dans l'habitacle 11 et assurer ainsi la ventilation et la suppression de la buée, les passagers, par l'intermédiaire des pédaliers 28, 29, actionnent un ventilateur brassant l'air en provenance d'une prise d'entrée 46 prévue sur le reniflard 20 et débouchant dans la partie supérieure de l'habitacle 11.

Ce dernier renferme également les équipements de contrôle tels que compas, témoin pour la vérification de la pression de l'air renfermé dans les bonbonnes 43, 44 ainsi qu'un témoin indiquant le niveau du carburant. Pour le contrôle de la profondeur, on prévoit un profondimètre couplé à un détecteur de niveau provoquant soit le déclenchement de remplissage des ballasts 5, 6, soit en cas de défaillance du système de remplissage des ballasts 5, 6, le largage du lest.

En cas de malaise, on prévoit un temporisateur accouplé aux pédaliers 28, 29 qui, en constatant l'immobilité de ces derniers, déclenchera le largage du lest pour une émersion immédiate.

Pour diriger le véhicule marin 1, ce dernier comporte un double gouvernail situé de part et d'autre de l'hélice 35 et actionné par une tringle latérale.

Pour faciliter l'accès à l'habitacle 11, on relie les extrémités arrière 8 des tubes 2, 3 par une passerelle 47.

Le reniflard 20 comporte également une bouche d'air pour l'aspiration de l'air nécessaire au groupe moteur 20 ainsi qu'un périscope 48.

**Revendications**

1. Véhicule marin semi-submersible à propulsion en surface et en semi-submersion et composé essentiellemnent de deux flotteurs (2, 3) et de sièges (15, 16) placés entre ces derniers, caractérisé en ce qu'il comporte, solidaire des deux flotteurs en forme de tube (2, 3), un habitacle (11) en forme de bulle, étanche et transparent, dont la hauteur est supérieure à la profondeur de plongée (13) et renfermant des moyens de propulsion en surface, constitués de pédaliers (28, 29) entraînant en rotation, par l'intermédiaire de chaînes (30, 31) et d'une boîte de renvoi (32), une hélice (35) située à l'extrémité (34) d'un arbre (33) relié à la boîte de renvoi (32); des moyens de propulsion en semi-submersion constitués d'un moteur (40) et plus particulièrement d'un petit moteur marin sollicité par un élément de commande (41) par le passager et actionnant la boîte de renvoi (32) pourvue de moyens de débrayage permettant d'intervertir à volonté l'utilisation des moyens de propulsion, et des équipements de contrôle constitués par un profondimètre accouplé à un détecteur de niveau, un témoin pour la vérification de la pression de l'air renfermé dans des bonbonnes d'air (43, 45) et un témoin indiquant le niveau du carburant, et des moyens de sécurité constitués d'un temporisateur accouplé aux pédaliers (28, 29) qui, en constatant l'immobilité de ces derniers, déclenchera le largage automatique de lest pour une émersion immédiate.

2. Véhicule marin semi-submersible selon la revendication 1, caractérisé en ce que l'habitacle (11) comporte deux compartiments (26, 27) dont l'un (26) renferme les moyens de propulsion en surface et l'autre (27) renferme les moyens de propulsion en semi-submersion (40); une partie inférieure (12) de cet habitacle (11) est pourvue d'un tunnel (21) permettant de réduire le maître couple du véhicule marin (1) et la puissance nécessaire pour son avance; des compartiments de lest (22, 23) situés de part et d'autre du tunnel (21) sont prévus, ces compartiments (22, 23) présentant une trappe (24, 25) pour le largage du lest en cas d'incident; un ventilateur logé dans l'habitacle (11) est prévu pour la circulation de l'air en provenance d'une prise d'entrée (46) et la suppression de la buée, ce ventilateur étant actionné par les pédaliers (28, 29).

3. Véhicule marin semi-submersible selon la revendication 1, caractérisé en ce qu'il comporte une coupole (17) recouvrant l'habitacle (11) et pouvant être rabattue autour d'un axe d'articulation horizontal (18) à l'aide d'une poignée de manoeuvre (19) pourvue d'un élément de sécurité annihilant tout déverrouillage intempestif au cours de la plongée; cette coupole (17) présentant un reniflard (20), pourvu d'une prise d'air (46) pour la circulation de l'air dans l'habitacle (11), une prise d'air pour le groupe moteur (40) et un périscope (48).

4. Véhicule marin semi-submersible selon la revendication 1, caractérisé en ce qu'il comporte un compresseur (42) actionné par le groupe moteur (40) et alimentant en air soit des bonbonnes d'air de secours (43, 44), soit des ballasts (5, 6) disposés dans les tubes (2, 3); un pressostat étant prévu actionnant un bipasse (46) pour la mise en action des bonbonnes d'air de secours (43, 44) en cas de défaillance du compresseur (42).


**Patentansprüche**

1. Halbabsinkbares Wasserfahrzeug mit Antrieb auf der Oberfläche und in halbabgesunkenem Zustand und im wesentlichen bestehend aus zwei Schwimmern (2, 3) und Sitzen (15, 16) zwischen diesen, gekennzeichnet dadurch, dass es, zusammen mit den beiden rohrförmigen Schwimmern (2, 3), eine blasenformige, abgedichtete und transparente Fahrgastkabine (11) umfasst, deren Höhe grösser ist als die Tauchtiefe (13), und die die Oberflächenantriebsmittel in sich birgt, bestehend aus Pedalen (28, 29), die durch Rotation, über Ketten (30, 31) und ein Vorgelegegehause (32), eine Schraube (35) am Ende (34) einer Welle (33), die mit dem Vorgelegegehäuse (32) verbunden ist, antreiben; Antriebsmittel in halbabgesunkenem Zustand bestehend aus einem Motor (40) und insbesondere eines kleinen Bootsmotors, vom Fahrgast beansprucht mittels eines Steuerelements (41) und der das Vorgelegegehäuse (32) betätigt, versehen mit Kupplungsvorrichtungen, die ermöglichen, den Einsatz der Antriebsmittel beliebig abzuwechseln, und Kontrollausrüstungen, bestehend aus einem Tiefenmesser, gekoppelt mit einem Wasserstandsdetektor, einer Kontrolleuchte zur Überprüfung des Luftdrucks in den Luftflaschen (43, 45) und einer Kontrolleuchte zur Anzeige des Treibstoffpegels und aus Sicherheitsvorrichtungen, bestehend aus einem mit den Pedalen (28, 29) gekoppelten Zeitwerk, das bei Feststellung einer Immobilitat der letzteren die automatische Aussetzung des Ballasts für ein sofortiges Auftauchen auslöst.

2. Halbabsinkbares Wasserfahrzeug gemäss Anspruch 1, gekennzeichnet dadurch, dass die Fahrgastkabine (11) zwei Abteilungen (26, 27) umfasst, deren eine (26) die Oberflächenantriebsmittel (27) und deren andere die Antriebsmittel für halbabgesunkenen Zustand (40) enthält; ein unterer Teil (12) dieser Fahrgastkabine (11) ist mit einem Tunnel (21) versehen, der es ermöglicht, den Hauptspant des Wasserfahrzeugs (1) und die für seinen Vorschub erforderliche Leistung zu reduzieren; es sind Ballastabteilungen (22, 23) an beiden Seiten des Tunnels (21) vorgesehen, die eine Luke (24, 25) für die Aussetzung des Ballasts in einem Notfall enthalten; in der Fahrgastkabine (11) ist ein Ventilator für die Umwälzung der durch einen Lufteintritt (46) hereinkommenden Luft und die Ausschaltung von Dampf ermöglicht, vorgesehen, der von den Pedalen (28, 29) betrieben wird.

3. Halbabsinkbares Wasserfahrzeug gemäss Anspruch 1, gekennzeichnet dadurch, dass es eine Kuppel (17) umfasst, die die Fahrgastkabine (11) abdeckt und um eine horizontale Gelenkachse (18) mittels eines Griffs (19) zurückgeklappt werden kann, der mit einem Sicherheitselement versehen ist, das jede unzeitige Entriegelung während des Tauchens ausschliesst; diese Kuppel (17) verfügt über ein Luftrohr (20), das mit einem Lufteintritt (46) für die Luftzirkulation in der Fahrgastkabine (11) sowie mit einem Lufteintritt für das Triebwerk (40) und einem Periskop (48) versehen ist.

4. Halbabsinkbares Wasserfahrzeug gemäss Anspruch 1, gekennzeichnet dadurch, dass es einen Kompressor (42) umfasst, der vom Triebwerk (40) betrieben wird und entweder die Notluftflaschen (43, 44) oder den Ballast (5, 6) in den Rohren (2, 3) mit Luft versorgt; ein Druckregler ist vorgesehen, der im Fall des Versagens des Kompressors (42) einen Bypass (46) für die Inbetriebsetzung der Notluftflaschen (43, 44) betätigt.

## Claims

1. A semi-underwater marine vehicle with both a surface and a semi-submerged propulsion system, consisting basically of two floats (2, 3) with seats (15, 16) placed between them, characterised by the fact that it comprises, built onto the tube-shaped floats (2, 3) a bubble-shaped cockpit (11), watertight and trasparent, the height of which is more than the diving depth (13) and contains a surface propulsion system consisting of pedals (28, 29) which, by means of chains (30, 31) and a gearbox (32), turns a propeller (35) located at the extremity (34) of a shaft (33) connected to the gearbox (32), a semi-submerged propulsion system consisting of an engine (40), and in particular a small marine engine driven by a control lever (41) operated by the passenger, which actuates the gearbox (32) fitted with a declutching appliance making it possible to switch at will from one propulsion unit to the other; and control equipment consisting of a depth gauge coupled to a level detector, a indicator showing the air pressure inside the compressed air taks (43, 45), a fuel gauge, and safety devices consisting of a automatic timer coupled with the pedals (28, 29) which, if it records the immobility of the latter, will set off the automatic discharge of the ballast so as to bring the vehicle to the surface immiediately.

2. A semi-underwater marine vehicle in accordance with Claim 1, characterised by the fact that the cockpit (11) comprises two compartments (26, 27) one of which (26) contains the surface propuision units ad the other (27) contains the semi-underwater propulsion units (40); a lower section (12) of this cockpit (11) is fitted with a tunnel (21) making it possible to reduce the main gear of the marine vehicle (1) and the power needed to drive it, there are ballast compartments (22, 23) on either side of the tunnel (21); these compartments (22, 23) are each fitted with a hatch (24, 25) for the emergency discharge of ballast; a ventilator fitted in the cockpit (11) is provided to renew the air which enters via an air intake (46) ad to eliminate condensation, this ventilator being powered by the pedals (28, 29).

3. A semi-underwater marine vehicle in accordace with Claim 1, characterised by the fact that it comprises a dome (17) covering the cockpit (11), which can be tilted back by means of a horizontal hinged shaft (18) operated by a lever (19) fitted with a safety device to prevent any accidental unfastening during the dive; this dome (17) has an air breather valve (20) fitted with an air intake (46) for the ventilation of the cockpit (11), an air intake for the engine unit (40), and a periscope (48).

4. A semi-underwater marine vehicle in accordance with Claim 1, characterised by the fact that it comprises a compressor (42) driven by the engine unit (40) which feeds air either to the emergency air tanks (43, 44) or to the ballast compartments (5, 6) located in the tubes (2, 3); a pressure gauge is provided for, which controls a bypass (46) to actuate the emergency air tanks (43, 44) in the event of a compressor (42) failure.

FIG. 1

FIG. 2

48

46

20

16

1

10

47

3

29

8

12

2

9

41

15

28

7

17

18

19

11

0 165 192

FIG. 3

FIG. 4

0 165 192

# FIG. 5